(19) Europäisches Patentamt
European Patent Office
Office européen des brevets

(11) Veröffentlichungsnummer: **0 515 898 A2**

(12) **EUROPÄISCHE PATENTANMELDUNG**

(21) Anmeldenummer: **92108024.8**

(22) Anmeldetag: **13.05.92**

(51) Int. Cl.[5]: **C08L 23/10**, C08F 297/08, //(C08L23/10,23:16,23:16)

(30) Priorität: **31.05.91 DE 4117843**

(43) Veröffentlichungstag der Anmeldung: **02.12.92 Patentblatt 92/49**

(84) Benannte Vertragsstaaten: **BE DE ES FR GB IT NL**

(71) Anmelder: **BASF Aktiengesellschaft**
**Carl-Bosch-Strasse 38**
**W-6700 Ludwigshafen(DE)**

(72) Erfinder: **Hungenberg, Klaus-Dieter, Dr.**
**Ortsstrasse 135**
**W-6943 Birkenau(DE)**
Erfinder: **Schwager, Harald, Dr.**
**Ziegelofenweg 7**
**W-6720 Speyer(DE)**

(54) **Polypropylenmischungen mit zwei verschiedenen Propylen-Ethylen-Copolymerisaten.**

(57) Polypropylenmischungen, enthaltend

a) ein Propylenpolymerisat mit 0 bis 2 Gew.-% weiterer, einpolymerisierter $C_2$- bis $C_{10}$-Alk-1-ene,

b) ein Propylen-Ethylen-Copolymerisat mit einem Ethylengehalt von 20 bis 70 Gew.-% und

c) ein weiteres Propylen-Ethylen-Copolymerisat mit einem Ethylengehalt von 2 bis 60 Gew.-% ,

wobei das Propylen-Ethylen-Copolymerisat b) einen höheren Ethylengehalt aufweist als das Propylen-Ethylen-Copolymerisat c).

Die erfindungsgemäßen Polypropylenmischungen zeichnen sich durch eine hohe Schlagzähigkeit und eine hohe Steifigkeit aus.

EP 0 515 898 A2

Die vorliegende Erfindung betrifft Polypropylenmischungen, enthaltend

a) ein Propylenpolymerisat mit 0 bis 2 Gew.-% weiterer, einpolymerisierter $C_2$- bis $C_{10}$-Alk-1-ene,

b) ein Propylen-Ethylen-Copolymerisat mit einem Ethylengehalt von 20 bis 70 Gew.-% und

c) ein weiteres Propylen-Ethylen-Copolymerisat mit einem Ethylengehalt von 2 bis 60 Gew.-% ,

wobei das Propylen-Ethylen-Copolymerisat b) einen höheren Ethylengehalt aufweist als das Propylen-Ethylen-Copolymerisat c).

Außerdem betrifft die vorliegende Erfindung Verfahren zur Herstellung der erfindungsgemäßen Polypropylenmischungen und Folien und Formkörper aus diesen Polypropylenmischungen.

Die Eigenschaften von Polymeren können durch Zumischen von anderen Polymeren verändert werden, wobei Polymermischungen, sogenannte "Blends" entstehen. So lassen sich beispielsweise die Eigenschaften von harten, temperaturbeständigen Polymeren mit denen von weichen, elastischen Polymeren durch Vermischen derart kombinieren, daß die dabei erhältlichen "Blends" eine vorteilhafte Kombination der guten Eigenschaften beider Polymerer darstellen (Saechtling, Kunststoff-Taschenbuch, Carl Hanser-Verlag, München, Seite 8, [1986]). In diesem Zusammenhang sind beispielsweise Ethylen-Propylen-Copolymerisate mit unterhalb der Verarbeitungstemperatur aufschmelzenden Polyethylen-Domänen in amorpher Polypropylen-Matrix von Interesse (Saechtling, Kunststofftaschenbuch, Carl Hanser-Verlag, München, Seite 235 [1986]).

Weiterhin sind Mischungen aus hochdichtem Polyethylen (HDPE) einerseits und Ethylen-Propylen-Dien-Copolymerisaten andererseits bekannt, die sich durch eine hohe mechanische Stabilität auszeichnen (Polymer Bulletin, 21, Seite 401-408 [1989]). Diese werden allerdings nach einem relativ aufwendigen Verfahren in Anwesenheit von Peroxiden hergestellt, was ihren Einsatzbereich einschränkt.

Eine Kombination unterschiedlicher mechanischer Eigenschaften, insbesondere einer hohen Schlagzähigkeit bei noch ausreichend hoher Steifigkeit, versucht man auch bei bestimmten Propylen-Ethylen-Copolymerisaten zu verwirklichen. Diese sind durch Ziegler-Natta-Katalyse erhältlich (US-A 4 454 299, US-A 4 455 405, ZA-B 0084/3561, ZA-B 0084/3563, ZA-B 0084/5261, EP-A 355 603, GB-A 1 032 945), wobei man zunächst gasförmiges Propylen in einer ersten Reaktionsstufe polymerisiert und das daraus resultierende Homopolymerisat anschließend in eine zweite Reaktionsstufe bringt, wo diesem ein Gemisch aus Ethylen und Propylen hinzupolymerisiert wird. Die Verfahren werden gewöhnlich bei erhöhtem Druck und in Anwesenheit von Wasserstoff als Molmassenregler durchgeführt. Die dabei erhältlichen Copolymerisate weisen meist eine ausgezeichnete Schlagzähigkeit, zugleich aber auch eine im Vergleich zu Propylenhomopolymerisaten reduzierte Steifigkeit auf. Für einige Anwendungsgebiete werden aber häufig Polymerisate benötigt, die sowohl eine ähnlich hohe Schlagzähigkeit wie kautschukartiges Propylen-Ethylen-Copolymerisat als auch eine ähnlich hohe Steifigkeit wie überwiegend kristallines Propylenhomopolymerisat aufweisen.

Der vorliegenden Erfindung lag daher die Aufgabe zugrunde, den geschilderten Nachteilen abzuhelfen und Polymerisate mit möglichst hohen Schlagzähigkeitswerten und einer möglichst hohen Steifigkeit herzustellen.

Demgemäß wurden die eingangs definierten neuen Polypropylenmischungen aus einem Propylenpolymerisat a) und zwei verschiedenen Propylen-Ethylen-Copolymerisaten b) und c) gefunden.

Die erfindungsgemäßen Polypropylenmischungen enthalten ein Propylenpolymerisat a) mit 0 bis 2 Gew.-% , vorzugsweise mit 0 bis 1 Gew.-% weiterer, einpolymerisierter $C_2$- bis $C_{10}$-Alk-1-ene. Unter einpolymerisierten $C_2$- bis $C_{10}$-Alk-1-ene versteht man dabei insbesondere Ethylen, But-1-en, Pent-1-en, Hex-1-en, Hept-1-en oder Oct-1-en, sowie Gemische dieser Comonomeren, wobei bevorzugt Ethylen oder But-1-en verwendet werden. Vorzugsweise wird jedoch als Propylenpolymerisat a) ein Propylenhomopolymerisat verwendet.

Weiterhin enthalten die erfindungsgemäßen Polypropylenmischungen zwei verschiedene Propylen-Ethylen-Copolymerisate b) und c), die sich durch ihren Ethylengehalt voneinander unterscheiden. Dabei besteht die Polypropylenmischung üblicherweise aus 40 bis 97 Gew.-% Propylenpolymerisat a) und aus insgesamt 3 bis 60 Gew.-% Propylen-Ethylen-Copolymerisate b) und c). Besonders bevorzugt sind Polypropylenmischungen aus 45 bis 90 Gew.-% Propylenpolymerisat a) und aus insgesamt 10 bis 55 Gew.-% Propylen-Ethylen-Copolymerisate b) und c).

Das Propylen-Ethylen-Copolymerisat b) enthält 20 bis 70 Gew.-%, vorzugsweise 30 bis 60 Gew.-% Ethylen und weist stets einen höheren Ethylengehalt auf als das Propylen-Ethylen-Copolymerisat c). Dessen Ethylengehalt beträgt 2 bis 60 Gew.-%, vorzugsweise 2 bis 50 Gew.-%. In den erfindungsgemäßen Polypropylenmischungen liegen beide Propylen-Ethylen-Copolymerisate b) und c) üblicherweise in solchen Mengen vor, daß das Gewichtsverhältnis zwischen dem ethylenreicheren Propylen-Ethylen-Copolymerisat b) und dem ethylenärmeren Propylen-Ethylen-Copolymerisat c) 30:1 bis 1:30, insbesondere 25:1 bis 1:10, beträgt.

Die Herstellung der erfindungsgemäßen Polypropylenmischungen erfolgt üblicherweise durch Vermischen der einzelnen Polymerbestandteile in den, in der Kunststofftechnik zur Vereinigung von Stoffen

eingesetzten Apparaturen, beispielsweise in Trommelmischern, in Mühlen, in Schnecken-oder Scheibenextrudern, in Walzwerken, in Knetern oder auch in Polymerisationsreaktoren, die mit geeigneten Rührvorrichtungen versehen sind. Der Mischungsvorgang wird dabei bei Temperaturen von 50 bis 280 °C, insbesondere von 60 bis 250 °C und Drücken von 1 bis 100 bar, insbesondere von 1 bis 60 bar durchgeführt. Die mittleren Verweilzeiten der einzelnen Polymerisate hängen jeweils von den gewählten Mischungsapparaturen ab. Bei Extrudern betragen die mittleren Verweilzeiten etwa 0,1 bis 10 Minuten, bei mit Rührvorrichtungen versehenen Polymerisationsreaktoren können die mittleren Verweilszeiten auch im Bereich von 0,5 bis 5 Stunden liegen.

Nach einem bevorzugten Herstellungsverfahren sind die erfindungsgemäßen Polypropylenmischungen durch Vermengen einer Polymermischung I aus einem Propylenpolymerisat a) und einem Propylen-Ethylen-Copolymerisat b) mit einer weiteren Polymermischung II aus einem Propylenpolymerisat a) und einem Propylen-Ethylen-Copolymerisat c) bei Temperaturen von 50 bis 280 °C, insbesondere von 60 bis 250 °C und Drücken von 1 bis 100 bar, insbesondere von 1 bis 60 bar, erhältlich.

Die Herstellung der Polymermischungen I und II wiederum erfolgt üblicherweise durch Polymerisation mit Hilfe von Ziegler-Natta-Katalysatoren, vorzugsweise in der Gasphase und in Anwesenheit von Molmassenreglern, mit den in der Technik gebräuchlichen Polymerisationsreaktoren. Nach einem bevorzugt angewandten zweistufigen Verfahren wird dabei in einer ersten Polymerisationsstufe Propylen polymerisiert und das dadurch erhaltene Polypropylen anschließend zusammen mit dem Ziegler-Natta-Katalysator in eine zweite Polymerisationsstufe übergeführt, wo diesem ein Gemisch aus Propylen und Ethylen hinzupolymerisiert wird. In der Regel sind die Polymermischungen I und II auch kommerziell erhältlich.

Die bei diesem Verfahren verwendeten Ziegler-Natta-Katalysatoren bestehen üblicherweise aus einer Feststoffkomponente, die neben Titan, Magnesium und einem Halogen noch einen Elektronendonor aufweist, einer Aluminiumkomponente und einer weiteren Eletronendonorkomponente.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate der Bruttoformel $SiO_2 \cdot aAl_2O_3$, wobei a für einen Wert von 0,001 bis 2, insbesondere von 0,01 bis 0,5 steht, gut bewährt haben.

Die bevorzugt verwendeten Träger weisen ein Teilchendurchmesser von 0,1 bis 1000 µm, insbesondere von 10 bis 300 µm, ein Porenvolumen von 0,1 bis 10 $cm^3$/g, insbesondere von 1,0 bis 5,0 $cm^3$/g und eine spezifische Oberfläche von 10 bis 1000 $m^2$/g, insbesondere von 100 bis 500 $m^2$/g auf.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-($C_1$-$C_{10}$-alkyl)-Verbindungen verwendet werden. Daneben kann die titanhaltige Feststoffkomponente noch Halogen, bevorzugt Chlor oder Brom, enthalten.

Ferner enthält die titanhaltige Feststoffkomponente noch Elektronendonorverbindungen, beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel I

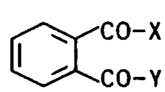 I

verwendet, wobei X und Y jeweils für ein Chloratom oder einen $C_1$- bis $C_{10}$-Alkoxyrest oder gemeinsam für Sauerstoff stehen. Besonders bevorzugte Elektronendonorverbindungen sind Phthalsäureester, wobei X und Y einen $C_1$-$C_8$-Alkoxyrest, beispielsweise einen Methoxy-, Ethoxy-, Propyloxy- oder einen Butyloxyrest bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren. Als Hydroxyverbindungen werden bei diesen Estern die bei Veresterungsreaktionen üblichen Alkohole verwendet, u.a. $C_1$- bis $C_{15}$-Alkanole, $C_5$- bis $C_7$-Cycloalkanole, die ihrerseits $C_1$- bis $C_{10}$-Alkylgruppen tragen können, ferner $C_6$- bis

$C_{10}$-Phenole.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066 und der US-A 4 857 613 beschrieben.

Bei der Herstellung der titanhaltigen Feststoffkomponente wird bevorzugt folgendes dreistufige Verfahren angewandt:

In der ersten Stufe versetzt man zunächst einen feinteiligen Träger, bevorzugt $SiO_2 \cdot aAl_2O_3$ - wobei a für eine Zahl im Bereich von 0,001 bis 2, insbesondere im Bereich von 0,01 bis 0,5 steht - mit einer Lösung der magnesiumhaltigen Verbindung in einem flüssigen Alkan, wonach man dieses Gemisch 0,5 bis 5 Stunden lang bei einer Temperatur zwischen 10 und 120 °C rührt. Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren überschuß, bezogen auf die magnesiumhaltige Verbindung, hinzu. Nach etwa 30 bis 120 Minuten trennt man den Feststoff von der flüssigen Phase ab.

In der zweiten Stufe bringt man das auf diese Weise erhaltene Produkt in ein flüssiges Alkan ein und fügt danach ein $C_1$- bis $C_8$-Alkanol, insbesondere Ethanol, ein Halogenid oder ein Alkoholat des drei- oder vierwertigen Titans, insbesondere Titantetrachlorid, sowie eine Elektronendonorverbindung hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1,0 mol, der Elektronendonorverbindung ein. Dieses Gemisch wird wenigstens eine Stunde lang bei einer Temperatur zwischen 10 und 150 °C gerührt, der so erhaltene feste Stoff anschließend abfiltriert und mit einem flüssigen Alkan, bevorzugt mit Hexan oder Heptan, gewaschen.

In der dritten Stufe extrahiert man den aus der zweiten Stufe erhaltenen Feststoff einige Stunden lang bei Temperaturen zwischen 100 und 150 °C mit überschüssigem Titantetrachlorid oder einer im überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit Cokatalysatoren als Ziegler-Natta-Katalysatorsystem verwendet. Als Cokatalysatoren kommen dabei Aluminiumverbindungen und weitere Elektronendonorverbindungen in Frage.

Als Cokatalysator geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugte Elektronendonorverbindungen sind dabei siliciumorganische Verbindungen der allgemeinen Formel II

$R^1_nSi(OR^2)_{4-n}$ II.

wobei

$R^1$ gleich oder verschieden ist und eine $C_1$- bis $C_{20}$-Alkylgruppe, eine 5- bis 7-gliedrige Cycloalkylgruppe, die ihrerseits eine $C_1$- bis $C_{10}$-Alkylgruppe tragen kann, oder eine $C_6$- bis $C_{20}$-Aryl- oder Arylalkylgruppe bedeutet, $R^2$ gleich oder verschieden ist und eine $C_1$- bis $C_{20}$-Alkylgruppe bedeutet und n für die Zahlen 1, 2 oder 3 steht. Besonders bevorzugt werden dabei solche Verbindungen, in denen $R^1$ eine $C_1$- bis $C_8$-Alkylgruppe oder eine 5- bis 7-gliedrige Cycloalkylgruppe, sowie $R^2$ eine $C_1$- bis $C_4$-Alkylgruppe bedeutet und n für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan und Diethoxyisobutylisopropylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 10:1 bis 800:1, insbesondere 20:1 bis 200:1, und das Molverhältnis zwischen der Aluminiumverbindung und der als Cokatalysator eingesetzten Elektronendonorverbindung 1:1 bis 100:1, insbesondere 2:1 bis 80:1 beträgt. Die

einzelnen Katalysatorbestandteile können in beliebiger Reihenfolge einzeln oder als Gemisch zweier Komponenten in das Polymerisationssystem eingebracht werden.

Die zur Darstellung der erfindungsgemäßen Polypropylenmischungen benötigten Polymermischungen I und II werden, wie bereits oben erwähnt, nach einem zweistufigen Verfahren hergestellt, wobei in der ersten Polymerisationsstufe ein Propylenpolymerisat a) mit 0 bis 2 Gew.-% weiterer einpolymerisierter $C_2$- bis $C_{10}$-Alk-1-ene und in der zweiten Polymerisationsstufe ein Propylen-Ethylen-Copolymerisat b) oder aber ein Propylen-Ethylen-Copolymerisat c) gebildet werden.

Die Polymerisation des Propylens wird in der ersten Polymerisationsstufe bei einem Druck von 20 bis 40 bar, einer Temperatur von 60 bis 90 °C und einer mittleren Verweilzeit des Reaktionsgemisches von 1 bis 5 Stunden durchgeführt. Bevorzugt sind dabei Drücke von 20 bis 35 bar, Temperaturen von 65 bis 85 °C und mittlere Verweilzeiten von 1,5 bis 4 Stunden. Man wählt die Reaktionsbedingungen üblicherweise so, daß in der ersten Polymerisationsstufe pro mmol der Aluminiumkomponente 0,05 bis 2 kg, bevorzugt 0,1 bis 1,5 kg, Propylenpolymerisat a) gebildet werden. Für den Fall, daß die Polymerisation des Propylens in Anwesenheit geringer Mengen von $C_2$-$C_{10}$-Alk-1-enen durchgeführt wird, wodurch sich ein Comonomerengehalt von bis zu 2 Gew.-%, vorzugsweise von bis zu 1 Gew.-% ergeben kann, ist dafür Sorge zu tragen, daß das Verhältnis der Partialdrücke zwischen Propylen und dem des $C_2$-$C_{10}$-Alk-1-ens oder des entsprechenden Comonomerengemisches im Bereich von 20:1 bis 500:1 liegt.

Das in der ersten Polymerisationsstufe gebildete Propylenpolymerisat a) wird nach Beendigung der Reaktion zusammen mit dem Ziegler-Natta-Katalysator aus dieser ausgetragen und in die zweite Polymerisationsstufe eingeführt, wo dem Propylenpolymerisat a) ein Gemisch aus Propylen und Ethylen hinzupolymerisiert wird. Der in der zweiten Polymerisationsstufe vorherrschende Druck liegt 7, bevorzugt 10 bar, unter dem der ersten Polymerisationsstufe und beträgt 5 bis 30, vorzugsweise 10 bis 25 bar. Die Temperatur liegt bei 30 bis 110 °C, bevorzugt bei 40 bis 90 °C und die mittlere Verweilzeit des Polymerisats beträgt 1 bis 5 Stunden, bevorzugt 1,5 bis 4 Stunden.

Zur Darstellung der Polymermischungen I oder II ist es notwendig, dem Propylenpolymerisat a) in dieser zweiten Polymerisationsstufe Propylen und Ethylen in jeweils bestimmten Mengenverhältnissen hinzuzupolymerisieren. Bei der Herstellung der ethylenreicheren Propylen-Ethylen-Copolymerisate b) wird dazu das Verhältnis der Partialdrücke zwischen Propylen und Ethylen auf etwa 0,2:1 bis 10:1, insbesondere auf etwa 0,5 :1 bis 8:1 eingestellt. Bei der Herstellung der ethylenärmeren Propylen-Ethylen-Copolymerisate c) liegt das Verhältnis der Partialdrücke zwischen Propylen und Ethylen im Bereich von 0,5:1 bis 200:1, insbesondere im Bereich von 1:1 bis 100:1.

Neben Propylen und Ethylen können in der zweiten Polymerisationsstufe noch geringe Mengen von $C_4$- bis $C_{10}$-Alk-1-enen, beispielsweise von But-1-en, Pent-1-en oder Hex-1-en mitpolymerisiert werden, wobei in diesem Fall das Verhältnis der Partialdrücke zwischen diesen $C_4$- bis $C_{10}$-Alk-1-enen und dem Ethylen nicht mehr als 1:100, insbesondere nicht mehr als 0,5:100 beträgt. Das Gewichtsverhältnis zwischen den in der ersten und den in der zweiten Polymerisationsstufe umgesetzten Monomeren wird bei der Herstellung der Polymermischungen I und II üblicherweise so eingestellt, daß dieses im Bereich von 0,5:1 bis 40:1, insbesondere im Bereich von 0,5:1 bis 10:1 liegt.

Die Polymermischungen I und II weisen einen Schmelzflußindex von 1 bis 100 g/10 min, insbesondere von 2 bis 50 g/10 min, bei 230 °C und unter einem Gewicht von 2,16 kg (bestimmt nach DIN 53 735) auf. Der Schmelzflußindex entspricht dabei der Menge an Polymerisat, die innerhalb von 10 Minuten aus der nach DIN 53 735 genormten Prüfvorrichtung bei einer Temperatur von 230 °C und unter einem Gewicht von 2,16 kg ausgepreßt wird.

Durch Vereinigen der auf diese Weise hergestellten Polymermischungen I und II unter den bereits beschriebenen Bedingungen sind nach diesem bevorzugten Verfahren die erfindungsgemäßen Polypropylenmischungen erhältlich. Darüber hinaus können diese aber noch nach einigen anderen Verfahren hergestellt werden.

Nach einem weiteren Herstellungsverfahren sind die erfindungsgemäßen Polypropylenmischungen auch dadurch erhältlich, daß man ein Propylenpolymerisat a) mit zwei unterschiedlichen Propylen-Ethylen-Copolymerisaten, einem ethylenreicheren Propylen-Ethylen-Copolymerisat b) und einem ethylenärmeren Propylen-Ethylen-Copolymerisat c) bei Temperaturen von 50 bis 280 °C und Drücken von 1 bis 100 bar vermengt. Bevorzugt sind dabei Temperaturen von 60 bis 250 °C und Drücke von 1 bis 60 bar. Die Vereinigung der drei verschiedenen Polymerisate, die sowohl kommerziell erhältlich sind, als auch getrennt voneinander analog dem bereits beschriebenen Verfahren zur Herstellung der Polymermischungen I und II hergestellt werden können, erfolgt dabei in den in der Kunststofftechnik dafür vorgesehenen Mischungsapparaturen.

In diesem Fall ist es auch möglich, das Propylenpolymerisat a) mit den zwei verschiedenen Propylen-Ethylen-Copolymerisaten b) und c) in einer Reaktorkaskade aus mehreren Rührautoklaven zu vereinigen,

wodurch sich die Herstellung und die Vermischung der drei verschiedenen Polymerisate in einem Apparatekomplex durchführen läßt. Dazu wird in einer ersten Polymerisationsstufe Propylen polymerisiert und das dabei erhältliche Propylenhomopolymerisat anschließend in eine zweite Polymerisationsstufe übergeführt, wo diesem ein Gemisch aus Propylen und Ethylen mit einem bestimmten Partialdruckverhältnis zwischen Propylen und Ethylen hinzupolymerisiert wird. Anschließend wird das in der zweiten Polymerisationsstufe vorliegende Polymerisat in eine dritte Polymerisationsstufe übergeführt, wo diesem ein weiteres Gemisch aus Propylen und Ethylen, jedoch mit einem von der zweiten Polymerisationsstufe verschiedenen Partialdruckverhältnis zwischen Propylen und Ethylen hinzupolymerisiert wird. Die jeweiligen Reaktionsbedingungen in den einzelnen Stufen entsprechen dabei denjenigen Reaktionsbedingungen, wie sie bei der Herstellung der Polymermischungen I und II für das Propylenpolymerisat a) und die Propylen-Ethylen-Copolymerisate b) und c) beschrieben wurden.

Die Schmelzflußindices der bei diesem Verfahren eingesetzten Polymerisate, dem Propylenpolymerisat a) und den beiden Propylen-Ethylen-Copolymerisaten b) und c) liegen im Bereich von 1 bis 100 g/10 min, insbesondere im Bereich von 2 bis 50 g/10 min, bei 230 °C und unter einem Gewicht von 2, 16 kg (bestimmt nach DIN 53 735).

Weiterhin lassen sich die erfindungsgemäßen Polypropylenmischungen auch dadurch herstellen, daß man eine Polymermischung I oder II aus einem Propylenpolymerisat a) und einem Propylen-Ethylen-Copolymerisat b) oder c) mit einem anderen Propylen-Ethylen-Copolymerisat c) oder b) mit unterschiedlichem Ethylengehalt bei Temperaturen von 50 bis 280 °C, vorzugsweise von 60 bis 250 °C und Drücken von 1 bis 100 bar, vorzugsweise von 1 bis 60 bar, miteinander vermengt. Nach diesem Verfahren wird eine Polymermischung I oder II, wie sie bereits im bevorzugt angewandten Herstellungsverfahren beschrieben wurde, mit einem Propylen-Ethylen-Copolymerisat c) oder b) in einer, in der Kunststofftechnik üblicherweise verwendeten Mischapparatur vereinigt, wobei das letztere Propylen-Ethylen-Copolymerisat c) oder b) sich von dem in der Polymermischung I oder II vorliegenden Propylen-Ethylen-Copolymerisat b) oder c) durch den Ethylengehalt unterscheidet.

Die erfindungsgemäßen Polypropylenmischungen weisen Schmelzflußindices von 1 bis 100 g/10 min, vorzugsweise von 2 bis 50 g/10 min, bei 230 °C und unter einem Gewicht von 2, 16 kg auf (bestimmt nach DIN 53 735).

Durch die spezielle Zusammensetzung der erfindungsgemäßen Polypropylenmischungen zeichnen sich diese insbesondere durch außerordentlich hohe Steifigkeits- und Schlagzähigkeitswerte aus. Dabei sind die Steifigkeitswerte der erfindungsgemäßen Polypropylenmischungen in der Regel höher als die der zu ihrer Herstellung eingesetzten Polymerkomponenten. Dies ist vor allem darauf zurückzuführen, daß die ethylenärmeren Propylen-Ethylen-Copolymerisate c) als Bindeglieder zwischen der Matrix aus den Propylenpolymerisaten a) und den in dieser Matrix eingelagerten ethylenreicheren Propylen-Ethylen-Copolymerisaten b) wirken. Dadurch erhöht sich sowohl die Mischbarkeit der einzelnen Polymerphasen untereinander, als auch die mechanische Belastbarkeit der Polypropylenmischungen insgesamt.

Die erfindungsgemäßen Polypropylenmischungen eignen sich insbesondere zur Herstellung solcher Folien und Formkörper, die stärkeren mechanischen Belastungen ausgesetzt sind und daher erhöhte Anforderungen in Bezug auf Steifigkeit und Schlagzähigkeit erfüllen müssen.

Beispiele 1 bis 5

Eine Polymermischung I aus einem Propylenhomopolymerisat a) und einem Propylen-Ethylen-Copolymerisat b) wurde in einem Zweischneckenextruder der Firma Werner & Pfleiderer ("ZSK 40") bei einer Temperatur von 225 °C, einem Druck von 14 bar und einer mittleren Verweilzeit von ca. 4 Minuten mit einer Polymermischung II aus einem Propylenhomopolymerisat a) und einem weiteren Propylen-Ethylen-Copolymerisat c) versetzt, wobei das Propylen-Ethylen-Copolymerisat b) der Polymermischung I stets einen höheren Ethylengehalt aufwies wie das der Polymermischung II.

Die jeweiligen Anteile des Propylenhomopolymerisats a) und des Propylen-Ethylen-Copolymerisats b) oder c) in den einzelnen Polymermischungen I und II können zusammen mit den jeweiligen Ethylengehalten in den Propylen-Ethylen-Copolymerisaten b) oder c) und den Schmelzflußindices der Polymerisate der nachfolgenden Tabelle 1 entnommen werden. Dort sind weiterhin die Anteile der Polymermischungen I und II an den erfindungsgemäßen Polypropylenmischungen wiedergegeben.

Die Steifigkeiten und die Schlagzähigkeiten der bei den Beispielen 1 bis 5 erhaltenen Polypropylenmischungen sowie die der zu ihrer Herstellung verwendeten Polymermischungen I und II sind in der nachfolgenden Tabelle 2 angegeben.

Tabelle 1

| | Beispiele 1 | 2 | 3 | 4 | 5 |
|---|---|---|---|---|---|
| **Polymermischung I** | | | | | |
| Anteil des Propylenhomopolymerisats [Gew.-%] | 86 | 86 | 86 | 86 | 70 |
| Anteil des Propylen-Ethylen-Copolymerisats [Gew.-%] | 14 | 14 | 14 | 14 | 30 |
| Ethylengehalt im Propylen-Ethylen-Copolymerisat [Gew.-%] | 45,1 | 45,1 | 45,1 | 45,1 | 61,5 |
| Schmelzflußindex des Propylenhomopolymerisats[a)] [g/10 min] | 26 | 26 | 26 | 26 | 10 |
| Schmelzflußindex der Polymermischung I[a)] [g/10 min] | 16 | 16 | 16 | 16 | 2 |
| **Polymermischung II** | | | | | |
| Anteil des Propylenhomopolymerisats [Gew.-%] | 86 | 86 | 86 | 86 | 70 |
| Anteil des Propylen-Ethylen-Copolymerisats [Gew.-%] | 14 | 14 | 14 | 14 | 30 |
| Ethylengehalt im Propylen-Ethylen-Copolymerisat [Gew.-%] | 27 | 27 | 16 | 16 | 16,7 |
| Schmelzflußindex des Propylenhomopolymerisats[a)] [g/10 min] | 24 | 24 | 26 | 26 | 10 |
| Schmelzflußindex der Polymermischung II[a)] [g/10 min] | 16 | 16 | 16 | 16 | 2 |
| **Polypropylenmischung** | | | | | |
| Anteil der Polymermischung I [Gew.-%] | 80 | 95 | 80 | 95 | 80 |
| Anteil der Polymermischung II [Gew.-%] | 20 | 5 | 20 | 5 | 20 |
| Schmelzflußindex der Polypropylenmischung[a)] [g/10 min] | 17 | 17 | 17 | 17 | 2,2 |

a) nach DIN 53 735, bei 230°C und 2,16 kg

Tabelle 2

| | Beispiele 1 | 2 | 3 | 4 | 5 |
|---|---|---|---|---|---|
| **Polymermischung I** | | | | | |
| Steifigkeit[b] [N/mm2] | 625 | 625 | 625 | 625 | 310 |
| Schlagzähigkeit[c] [kJ/m2] | | | | | |
| - bei -20°C | 65 | 65 | 65 | 65 | ohne Bruch |
| - bei -40°C | 55 | 55 | 55 | 55 | ohne Bruch |
| Kerbschlagzähigkeit[d] [kJ/m2] | 2,6 | 2,6 | 2,6 | 2,6 | 100 %*) |
| | | | | | *) angebrochen |
| **Polymermischung II** | | | | | |
| Steifigkeit[b] [N/mm2] | 595 | 595 | 628 | 628 | 330 |
| Schlagzähigkeit[c] [kJ/m2] | | | | | |
| - bei -20°C | 32 | 32 | 13 | 13 | ohne Bruch |
| - bei -40°C | 12 | 12 | 10 | 10 | 78 |
| Kerbschlagzähigkeit[d] [kJ/m2] | 1,9 | 1,9 | 2,0 | 2,0 | 10 |
| **Polypropylenmischung** | | | | | |
| Steifigkeit[b] [N/mm2] | 680 | 685 | 685 | 705 | 360 |
| Schlagzähigkeit[c] [kJ/m2] | | | | | |
| - bei -20°C | 62 | 77 | 56 | 77 | ohne Bruch |
| - bei -40°C | 47 | 59 | 47 | 62 | ohne Bruch |
| Kerbschlagzähigkeit[d] [kJ/m2] | 2,4 | 2,6 | 2,3 | 2,8 | 100 %*) |
| | | | | | *) angebrochen |

b) nach DIN 53 445
c) nach DIN 53 453
d) nach DIN 53 453

Ein Vergleich zwischen den mechanischen Eigenschaften der Polymermischungen I und II und den erfindungsgemäßen Polypropylenmischungen zeigt, daß die Polypropylenmischungen bei etwa gleich hoher

Schlagzähigkeit und Kerbschlagzähigkeit durchwegs höhere Steifigkeiten aufweisen wie die Polymermischungen I und II, aus denen sie hergestellt wurden.

**Patentansprüche**

1. Polypropylenmischungen, enthaltend
   a) ein Propylenpolymerisat mit 0 bis 2 Gew.-% weiterer, einpolymerisierter $C_2$- bis $C_{10}$-Alk-1-ene,
   b) ein Propylen-Ethylen-Copolymerisat mit einem Ethylengehalt von 20 bis 70 Gew.-% und
   c) ein weiteres Propylen-Ethylen-Copolymerisat mit einem Ethylengehalt von 2 bis 60 Gew.-%,
   wobei das Propylen-Ethylen-Copolymerisat b) einen höheren Ethylengehalt aufweist als das Propylen-Ethylen-Copolymerisat c).

2. Polypropylenmischungen nach Anspruch 1, welche aus 40 bis 97 Gew.-% Propylenpolymerisat a) und aus insgesamt 3 bis 60 Gew.-% Propylen-Ethylen-Copolymerisat b) und c) bestehen.

3. Polypropylenmischungen nach den Ansprüchen 1 und 2, wobei als Propylenpolymerisat a) ein Propylenhomopolymerisat verwendet wird.

4. Polypropylenmischungen nach den Ansprüchen 1 bis 3, wobei das Gewichtsverhältnis zwischen dem Propylen-Ethylen-Copolymerisat b) und dem Propylen-Ethylen-Copolymerisat c) 30:1 bis 1:30 beträgt.

5. Polypropylenmischungen nach den Ansprüchen 1 bis 4, wobei das Propylen-Ethylen-Copolymerisat b) einen Ethylengehalt von 30 bis 60 Gew.-% aufweist.

6. Polypropylenmischungen nach den Ansprüchen 1 bis 5, wobei das Propylen-Ethylen-Copolymerisat c) einen Ethylengehalt von 2 bis 50 Gew.-% aufweist.

7. Verfahren zur Herstellung von Polypropylenmischungen gemäß den Ansprüchen 1 bis 6, dadurch gekennzeichnet, daß man eine Polymermischung I aus einem Propylenpolymerisat a) und einem Propylen-Ethylen-Copolymerisat b) mit einer Polymermischung II aus einem Propylenpolymerisat a) und einem Propylen-Ethylen-Copolymerisat c) bei Temperaturen von 50 bis 280 °C und Drücken von 1 bis 100 bar mischt.

8. Verfahren zur Herstellung von Polypropylenmischungen gemäß den Ansprüchen 1 bis 6, dadurch gekennzeichnet, daß man ein Propylenpolymerisat a) mit zwei unterschiedlichen Propylen-Ethylen-Copolymerisaten, einem ethylenreicheren Propylen-Ethylen-Copolymerisat b) und einem ethylenärmeren Propylen-Ethylen-Copolymerisat c) bei Temperaturen von 50 bis 280 °C und Drücken von 1 bis 100 bar mischt.

9. Verfahren zur Herstellung von Polypropylenmischungen gemäß den Ansprüchen 1 bis 6, dadurch gekennzeichnet, daß man eine Polymermischung I oder II aus einem Propylenpolymerisat a) und einem Propylen-Ethylen-Copolymerisatb) oder c) mit einem anderen Propylen-Ethylen-Copolymerisat c) oder b) mit unterschiedlichem Ethylengehalt bei Temperaturen von 50 bis 280 °C und Drücken von 1 bis 100 bar mischt.

10. Verfahren zur Herstellung von Polypropylenmischungen gemäß den Ansprüchen 1 bis 6 durch dreistufige Polymerisation, dadurch gekennzeichnet, daß man zunächst in einer ersten Polymerisationsstufe Propylen polymerisiert und dem dadurch gebildeten Propylenpolymerisat a) anschließend in zwei weiteren Polymerisationsstufen jeweils ein Gemisch aus Propylen und Ethylen hinzupolymerisiert, wobei sich das Partialdruckverhältnis zwischen dem Propylen und dem Ethylen in der zweiten Polymerisationsstufe von dem in der dritten Polymerisationsstufe unterscheidet.